# EUROPÄISCHE PATENTSCHRIFT

(11) **EP 2 418 981 B1**
(45) Veröffentlichungstag und Bekanntmachung des Hinweises auf die Patenterteilung: **06.03.2013**
(21) Anmeldenummer: 10714181.4
(22) Anmeldetag: 31.03.2010
(51) Int. Cl.: A47C 20/04, A47C 20/08, F16C 3/03, F16D 3/06

(54) **ELEKTROMOTORISCH VERSTELLBARE STÜTZEINRICHTUNG**
SUPPORT DEVICE ADJUSTABLE BY AN ELECTRIC MOTOR
DISPOSITIF DE SUPPORT RÉGLABLE PAR MOTEUR ÉLECTRIQUE

(30) Priorität: 17.04.2009 DE 202009005769 U
(43) Veröffentlichungstag der Anmeldung: 22.02.2012
(73) Patentinhaber: Bionical Systems Ag, 8002 Zürich (CH)
(72) Erfinder: DEWERT, Eckhart, CH-8638 Goldingen (CH); HENLE, Jörg, 97232 Giebelstradt-Allersheim (DE)
(74) Vertreter: Wagner, Carsten
(86) Internationale Anmeldenummer: PCT/EP2010/002060
(87) Internationale Veröffentlichungsnummer: WO 2010/118827

(56) Entgegenhaltungen:
- WO-A1-96/12427
- DE-U1- 20 205 337
- US-A- 5 098 343
- US-A- 6 000 077

## Beschreibung

Die Erfindung betrifft eine elektromotorisch verstellbare Stützeinrichtung der im Oberbegriff des Anspruchs 1 genannten Art zur Abstützung einer Polsterung eines Sitz- und/oder Liegemöbels, insbesondere einer Matratze eines Bettes.

Derartige Stützeinrichtungen für Polsterungen von Sitz- und/oder Liegemöbeln sind beispielsweise in Form von Lattenrosten allgemein bekannt, beispielsweise durch EP 0 372 032 B2, DE 38 42 078 C2, DE 199 62 541 C3, DE 100 46 751 A1 und WO 96/12 427 A1.

Durch DE 10 2004 016 048 A1 ist eine elektromotorisch verstellbare Stützeinrichtung der betreffenden Art zur Abstützung einer Polsterung eines Sitz- und/oder Liegemöbels, insbesondere einer Matratze eines Bettes bekannt, die einen Grundkörper aufweist, der ein erstes Stützteil aufweist, das relativ zu einem zweiten Stützteil verstellbar, insbesondere verschwenkbar ist. Die bekannte Stützeinrichtung weist ferner eine elektromotorische Verstelleinrichtung auf, die mit dem ersten Stützteil zum Verstellen desselben in Wirkungsverbindung steht. Bei der bekannten Stützeinrichtung weist die Verstelleinrichtung eine erste und eine zweite Verstelleinheit auf, die an gegenüberliegenden Längsseiten des Grundkörpers angeordnet sind, wobei ein drehbar gelagertes Bauteil der ersten Verstelleinheit über eine Verbindungswelle im wesentlichen drehfest mit einem gleichartigen Bauteil der zweiten Verstelleinheit verbunden ist und wobei die axialen Enden der Verbindungswelle in Ausnehmungen an den drehbar gelagerten Bauteilen eingreifen. Bei den über die Verbindungswelle im wesentlichen drehfest miteinander verbundenen Bauteilen handelt es sich bei der aus der Druckschrift bekannten Stützeinrichtung um Schwenkwellen, die mit dem ersten Stützteil zum Verschwenken desselben in Wirkungsverbindung stehen. Die aus der Druckschrift bekannte Stützeinrichtung ist hierbei so ausgestaltet, daß einer Verstelleinheit ein Elektromotor zugeordnet ist, dessen Antriebsdrehmoment über die Verbindungswelle auf die zweite Verstelleinheit übertragen wird. Das jeweils über einen Spindeltrieb in eine Verstellkraft umgewandelte Antriebsdrehmoment des Elektromotors wird somit über die erste Verstelleinheit einerseits und die zweite Verstelleinheit andererseits in gegenüberliegende Längsseiten eines ersten Stützteiles eingeleitet, so daß beide Verstelleinheiten mechanisch miteinander zwangssynchronisiert sind. Auf diese Weise ist vermieden, daß sich die Längsseiten des Stützteiles bei einer Verstellbewegung in unterschiedlichem Maße anheben, was zu einer Verwindung des ersten Stützteiles führen könnte.

Der Erfindung liegt die Aufgabe zugrunde, eine elektromotorisch verstellbare Stützeinrichtung der im Oberbegriff des Anspruchs 1 genannten Art zur Abstützung einer Polsterung eines Sitz- und/oder Liegemöbels, insbesondere einer Matratze eines Bettes, anzugeben, deren Montage und Wartung einfach gestaltet sind.

Diese Aufgabe wird durch die im Anspruch 1 angegebene Erfindung gelöst. Erfindungsgemäß ist die Verbindungswelle axial zwischen einer ersten Position, in der die drehbar gelagerten Bauteile drehfest miteinander verbunden sind, und einer zweiten Position, in der ein Ende der Verbindungswelle aus der zugeordneten Ausnehmung freigekommen ist, beweglich, wobei die Verbindungswelle durch Federmittel in die erste Position vorgespannt ist. Beispielsweise und insbesondere können die Federmittel Schraubenfedern aufweisen, die in die als Sacklöcher ausgebildeten Ausnehmungen eingesetzt sind. Die Montage der Verbindungswelle erfolgt dann dadurch, daß die Verbindungswelle schräg zur Axialrichtung der drehbar gelagerten Bauteile angesetzt und mit einem Ende in das zugeordnete Sackloch eingesetzt wird. Daran anschließend wird die Verbindungswelle mit diesem Ende unter Zusammendrückung der zugeordneten Schraubenfeder und ggf. unter elastischer Verformung der Verbindungswelle vollständig in das Sackloch eingeführt, so daß das andere axiale Ende der Verbindungswelle der zugeordneten Ausnehmung gegenüberliegt und zu dieser ausgerichtet werden kann, so daß es unter der Wirkung der Schraubenfeder in die zugeordnete Ausnehmung bewegt wird, bis es an der in diesem Sackloch angeordneten Schraubenfeder zur Anlage gelangt. Die Verbindungswelle befindet sich dann in der ersten Position, in der die drehbar gelagerten Bauteile drehfest miteinander verbunden sind. In dieser ersten Position ist die Verbindungswelle vorzugsweise durch die Schraubenfedern zwischen den Gründen der Sacklöcher zentriert.

Auf diese Weise ist die Montage der Verbindungswelle besonders einfach gestaltet. Darüber hinaus ist im Falle einer Wartung eine Demontage der Verbindungswelle ebenfalls besonders einfach.

Vorzugsweise hat die Verbindungswelle zumindest an ihren Enden einen unrunden Querschnitt, wobei die Ausnehmungen in den drehbar gelagerten Bauteilen im Querschnitt zu den Enden der Verbindungswelle komplementär ausgebildet sind, so daß in der ersten Position der Verbindungswelle ein Formschluß zwischen den drehbar gelagerten Bauteilen und der Verbindungswelle erzielt ist und damit in der gewünschten Weise eine im wesentlichen drehfeste Verbindung der drehbar gelagerten Bauteile miteinander erzielt ist. Grundsätzlich kann die Verbindungswelle jedoch insgesamt oder an ihren Enden einen runden Querschnitt aufweisen, wobei in diesem Falle Mittel zur Herstellung einer drehfesten Verbindung mit den drehbar gelagerten Bauteilen vorgesehen sind.

Eine Weiterbildung der Erfindung sieht vor, daß die Ausnehmungen in den drehbar gelagerten Bauteilen Sacklöcher sind. Diese Ausführungsform ist besonders einfach im Aufbau und damit besonders kostengünstig herstellbar.

Eine vorteilhafte Weiterbildung der vorgenannten Ausführungsform sieht vor, daß die lichte axiale Weite zwischen den Gründen der Sacklöcher größer ist als die axiale Länge der Verbindungswelle. Auf diese Weise ist die Verbindungswelle mit axialem Spiel zwischen den Gründen der Sacklöcher aufgenommen, so daß sie zwischen der ersten Position und der zweiten Position beweglich ist.

Um die Federmittel zum Vorspannen der Verbindungswelle in die erste Position besonders einfach zu gestalten, sieht eine vorteilhafte Weiterbildung vor, daß die Federmittel wenigstens eine Feder aufweisen, die zwischen dem Grund des Sackloches und dem zugeordneten Ende der Verbindungswelle angeordnet ist.

Um die Feder besonders einfach und kostengünstig zu gestalten, sieht eine vorteilhafte Weiterbildung der vorgenannten Ausführungsform vor, daß die Feder eine Schraubenfeder ist.

Die Erfindung wird nachfolgend anhand eines Ausführungsbeispieles unter Bezugnahme auf die beigefügte Zeichnung näher erläutert. Dabei bilden alle beschriebenen, in der Zeichnung dargestellten und in den Patentansprüchen beanspruchten Merkmale für sich genommen sowie in beliebiger Kombination miteinander den Gegenstand der Erfindung unabhängig von ihrer Zusammenfassung in den Patentansprüchen und deren Rückbeziehung sowie unabhängig von ihrer Beschreibung bzw. Darstellung in der Zeichnung.

Es zeigt:
- Fig. 1: eine Perspektivansicht eines Ausführungsbeispiels einer erfindungsgemäßen Stützeinrichtung in Form eines Lattenrostes, wobei der Übersichtlichkeit halber die Latten des Lattenrostes weggelassen sind,
- Fig. 2: eine perspektivische Detailansicht einer Einzelheit einer ersten Verstelleinheit einer Verstelleinrichtung der Stützeinrichtung gemäß Fig. 1,
- Fig. 3: in gleicher Darstellung wie Fig. 2 eine Einzelheit im Bereich einer zweiten Verstelleinheit der Stützeinrichtung,
- Fig. 4: eine Ansicht einer Verbindungswelle des Ausführungsbeispieles gemäß Fig. 1,
- Fig. 5: eine Schnittansicht eines Details aus Fig. 3, wobei sich die Verbindungswelle in ihrer ersten Position befindet, und
- Fig. 6: in gleicher Darstellung wie Fig. 5 die Einzelheit gemäß Fig. 5, wobei sich die Verbindungswelle in ihrer zweiten Position befindet.

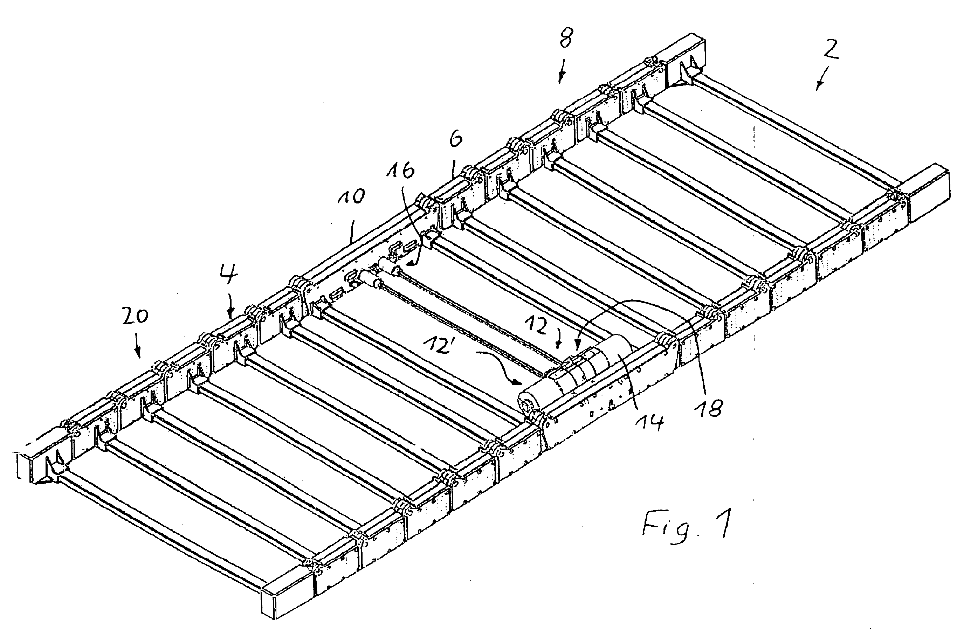

In Fig. 1 ist ein Ausführungsbeispiel einer erfindungsgemäßen Stützeinrichtung zur Abstützung einer Polsterung eines Sitz- und/oder Liegemöbels dargestellt, die als Lattenrost ausgebildet ist und zur Abstützung einer Matratze eines Bettes dient. Zur Vereinfachung der Darstellung sind in Fig. 1 sowohl die Latten des Lattenrostes als auch die Matratze weggelassen. Die-Stützeinrichtung 2 weist einen rahmenartigen Grundkörper 4 mit einem ersten Stützteil 6 auf, das Teil einer aus mehreren Stützteilen bestehenden Oberkörperstütze 8 ist. Das erste Stützteil 6 ist relativ zu einem zweiten Stützteil 10 verstellbar, wobei bei dem dargestellten Ausführungsbeispiel das zweite Stützteil 10 durch ein ortsfestes Stützteil gebildet ist, mit dem das erste Stützteil 6 gelenkig und um eine horizontale Schwenkachse verschwenkbar verbunden ist.

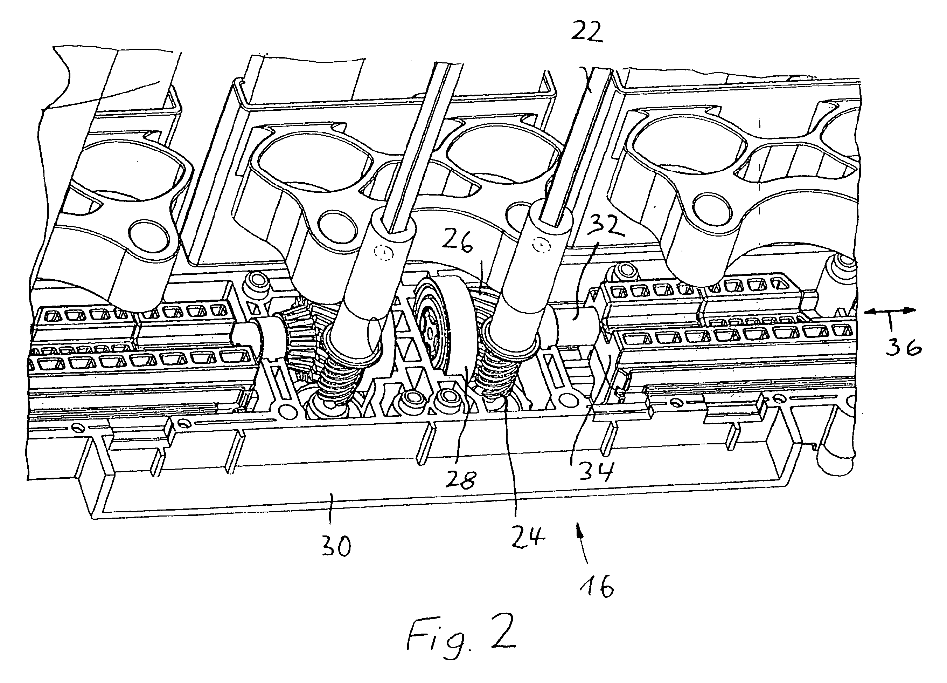

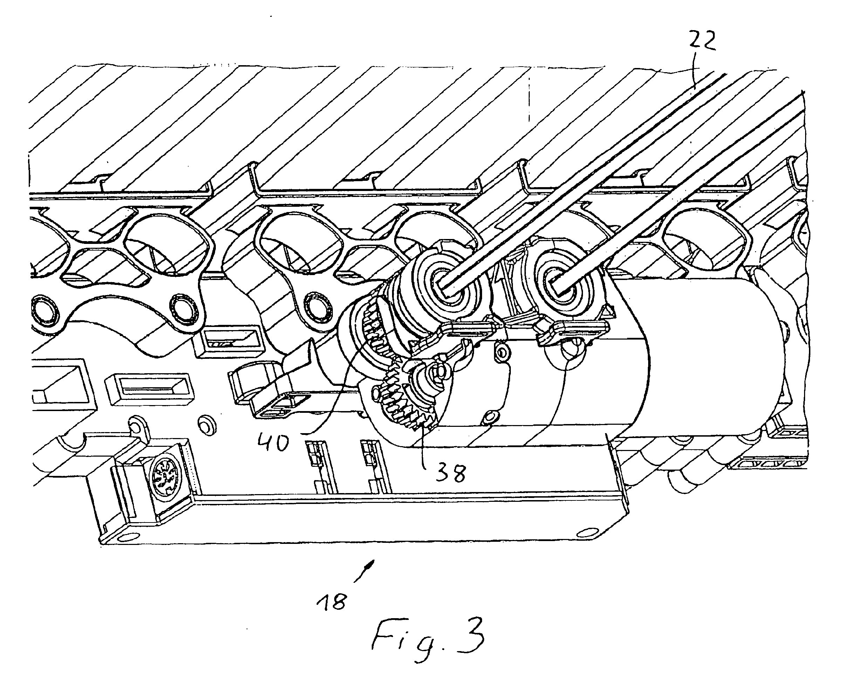

Die Stützeinrichtung 2 weist ferner eine elektromotorische Verstelleinrichtung 12 auf, die in weiter unten anhand der Figuren 2 und 3 näher erläuterter Weise mit dem ersten Stützteil 6 in Wirkungsverbindung steht zum Verstellen desselben relativ zu dem zweiten Stützteil 10. Die elektromotorische Verstelleinrichtung 12 weist einen Elektromotor 14 sowie eine erste Verstelleinheit 16, die weiter unten anhand von Fig. 2 näher erläutert wird, und eine zweite Verstelleinheit 18, die weiter unten anhand von Fig. 3 näher erläutert wird, auf.

Zur Verstellung einer Beinstütze 20 der Stützeinrichtung 2 ist eine entsprechende elektromotorische Verstelleinrichtung 12' vorgesehen, die zu der elektromotorischen Verstelleinrichtung 12 entsprechend aufgebaut ist und daher nicht näher erläutert wird.

Wie aus Fig. 1 ersichtlich ist, sind die erste Verstelleinheit 16 und die zweite Verstelleinheit 18 an gegenüberliegenden Längsseiten des Grundkörpers 4 angeordnet.

Fig. 2 zeigt eine Einzelheit im Bereich der ersten Verstelleinheit 16. Die erste Verstelleinheit 16 weist ein drehbar gelagertes Bauteil auf, das über eine Verbindungswelle 22 im wesentlichen drehfest mit einem gleichartigen Bauteil der-zweiten Verstelleinheit 18 verbunden ist. Bei diesem Ausführungsbeispiel ist das drehbar gelagerte Bauteil jeweils ein eingangsseitiges Getriebeelement eines Untersetzungsgetriebes, das bei diesem Ausführungsbeispiel als Schneckengetriebe ausgebildet ist, dessen Schnecke 24 das eingangsseitige Getriebeelement bildet, während ein mit dem mit der Schnecke 24 in Eingriff stehendes Schneckenrad 26 ein ausgangsseitiges Getriebeelement des Schneckengetriebes 24, 26 bildet. Das Schneckenrad 26 ist mittels eines Kugellagers 28 in einem Gehäuse 30 der ersten Verstelleinheit 16 gelagert. Aus Darstellungsgründen ist das Gehäuse 30 der ersten Verstelleinheit 16 in Fig. 2 geöffnet dargestellt.

Das Schneckenrad 26 ist drehfest mit einer drehbar gelagerten Gewindespindel 32 verbunden, von der aus Darstellungsgründen in Fig. 2 lediglich ein axialer Abschnitt dargestellt ist. Auf der Gewindespindel 32 ist drehfest und entsprechend der Drehrichtung der Gewindespindel 32 eine Spindelmutter 34 angeordnet, die das Abtriebsorgan der ersten Verstelleinheit 16 bildet. Entsprechend der Drehrichtung der Gewindespindel 32 ist die Spindelmutter 34 in Axialrichtung der Gewindespindel 32 in Richtung eines Doppelpfeiles 36 hin- und herbeweglich. Über den durch die Spindel 32 und die Spindelmutter 34 gebildeten Spindeltrieb wird somit die Drehbewegung der Verbindungswelle 22 in eine Linearbewegung der Spindelmutter 34 umgewandelt, so daß ein von dem Elektromotor 14 erzeugtes Antriebsdrehmoment in eine Verstellkraft umgewandelt wird, die in das erste Stützteil 6 eingeleitet wird. Die Art und Weise, wie eine Linearbewegung der Spindelmutter 34 in eine Schwenkbewegung des ersten Stützteiles 6 relativ zu dem zweiten Stützteil 10 umgesetzt werden kann, ist dem Fachmann allgemein bekannt und wird daher hier nicht näher erläutert.

Fig. 3 zeigt eine Einzelheit im Bereich der zweiten Verstelleinheit 18. Die zweite Verstelleinheit 18 ist zu der ersten Verstelleinheit 16 entsprechend spiegelbildlich aufgebaut und wird daher nicht näher erläutert.

Erfindungsgemäß ist somit die Schnecke 24 der ersten Verstelleinheit 16 über die Verbindungswelle 22 im wesentlichen drehfest mit einer entsprechenden Schnecke der zweiten Verstelleinheit 18 verbunden.

Die Einleitung eines Drehmomentes in die Verbindungswelle 22 erfolgt über den Elektromotor 14, der aus Darstellungsgründen in Fig. 3 weggelassen ist. Die Abtriebswelle des Elektromotors 14 steht mit einem ersten Zahnrad 38 in Drehantriebsverbindung, das in Eingriff mit einem zweiten Zahnrad 40 steht, das drehfest mit der Verbindungswelle 22 verbunden ist, so daß bei laufendem Elektromotor 14 die Verbindungswelle 22 entsprechend der Drehrichtung der Abtriebswelle des Elektromotors 14 gedreht wird.

Die Funktionsweise der erfindungsgemäßen Stützeinrichtung 2 ist wie folgt:
Zum Verstellen des ersten Stützteiles 6 relativ zu dem zweiten Stützteil 10 wird der Elektromotor 14 angesteuert, so daß sich die Verbindungswelle 22 dreht. Aufgrund der im wesentlichen drehfesten Verbindung zwischen der Schnecke 24 der ersten Verstelleinheit 16 und der entsprechenden Schnecke der zweiten Verstelleinheit 18 werden beide Schnecken im wesentlichen synchron gedreht, so daß sich die der ersten Verstelleinheit 16 zugeordnete Spindelmutter 34 und die entsprechende der zweiten Verstelleinheit 18 zugeordnete Spindelmutter im wesentlichen synchron bewegen. Die Spindelmuttern leiten eine Verstellkraft in gegenüberliegende Längsseiten des ersten Stützteiles 6 ein, so daß diese synchron oder im wesentlichen synchron angehoben werden.

Dadurch, daß eine Untersetzung des Antriebsdrehmomentes des Elektromotors 14 an einer in dem Antriebsstrang der Verbindungswelle 22 nachgeordneten Stelle erfolgt, nämlich durch das der ersten Verstelleinheit 16 zugeordnete Schneckengetriebe 24, 26 und das der zweiten Verstelleinheit 18 zugeordnete entsprechende Schneckengetriebe, überträgt die Verbindungswelle 22 ein relativ geringes Drehmoment, so daß die Verbindungswelle 22 mit einem relativ kleinen Querschnitt ausgeführt werden kann. Unter einer im wesentlichen drehfesten Verbindung zwischen gleichartigen drehbar gelagerten Bauteilen der ersten Verstelleinheit und der zweiten Verstelleinheit wird auch eine aufgrund einer Torsion der Verbindungswelle 22 nicht vollständig drehfeste Verbindung verstanden, solange die Torsion der Verbindungswelle 22 nicht zu einem wesentlichen Nacheilen bzw. Voreilen einer der Längsseiten des ersten Stützteiles 6 bei der Verstellung führt.

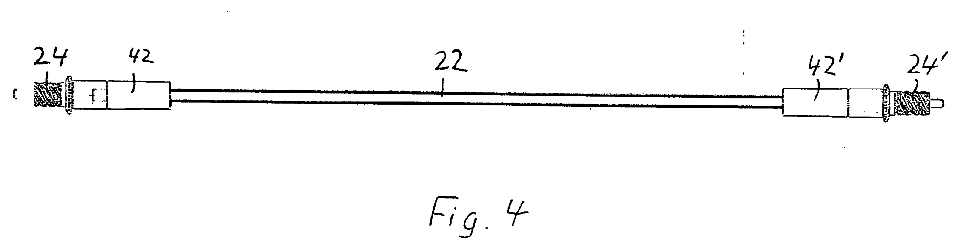

Fig. 4 zeigt eine Ansicht der Verbindungswelle 22 gemäß Fig. 2 und 3. Zur Herstellung einer drehfesten Verbindung zwischen der Schnecke 24 und der Verbindungswelle 22 ist die Schnecke 24 mit einem axialen Ansatz 42 drehfest verbunden, in dem eine axiale Ausnehmung gebildet ist, in die die Verbindungswelle 22 mit ihrem einen Ende eingreift. Bei dem dargestellten Ausführungsbeispiel hat die Verbindungswelle 22 einen unrunden, nämlich im wesentlichen quadratischen Querschnitt, wie dies aus den Figuren 2 und 3 ersichtlich ist. Dementsprechend hat die Ausnehmung in dem axialen Ansatz 42 einen hierzu im wesentlichen komplementär ausgebildeten Querschnitt.

Das der Schnecke 24 gegenüberliegende Ende der Verbindungswelle 22 ist entsprechend ausgebildet, so daß die entsprechenden Bauteile mit entsprechenden Bezugszeichen versehen sind.

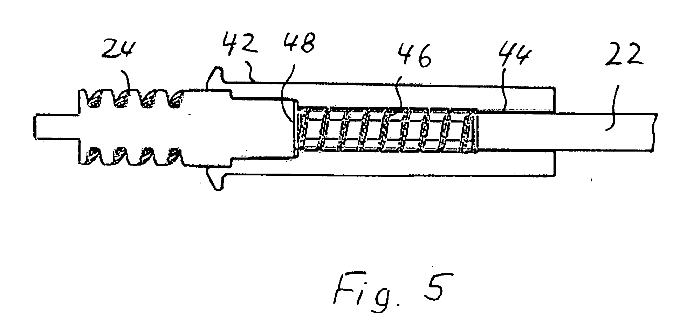

Aus Fig. 5, die eine Schnittansicht im Bereich der Schnecke 24 und des axialen Ansatzes 42 zeigt, ist eine Ausnehmung 44 ersichtlich, in die die Verbindungswelle 22 mit ihren zugeordneten Enden eingreift. Die Ausnehmung ist bei diesem Ausführungsbeispiel als Sackloch ausgebildet, wie dies ebenfalls aus Fig. 5 ersichtlich ist. Fig. 5 zeigt die Verbindungswelle 22 in ihrer ersten Position, in der die Schnecken 24, 24' (vgl. Fig. 4) durch die Verbindungswelle 22 im wesentlichen drehfest miteinander verbunden sind. Federmittel zum Vorspannen der Verbindungswelle 22 in diese erste Position weisen bei diesem Ausführungsbeispiel eine Schraubenfeder 46 auf, die zwischen dem Grund 48 der Ausnehmung 44 und dem axialen Ende der Verbindungswelle 22 angeordnet ist. Durch die Schraubenfeder 46 und die dem gegenüberliegenden axialen Ende der Verbindungswelle 22 zugeordnete weitere Schraubenfeder ist bei diesem Ausführungsbeispiel die Verbindungswelle 22 zwischen dem Grund 48 der Ausnehmung 44 und dem Grund der in dem axialen Ansatz 42' gebildeten Ausnehmung zentriert.

Um die Verbindungswelle 22 in die zweite Position zu bewegen, wird die Verbindungswelle 22 in Fig. 5 nach links bewegt, wobei die Schraubenfeder 46 zusammengedrückt wird.

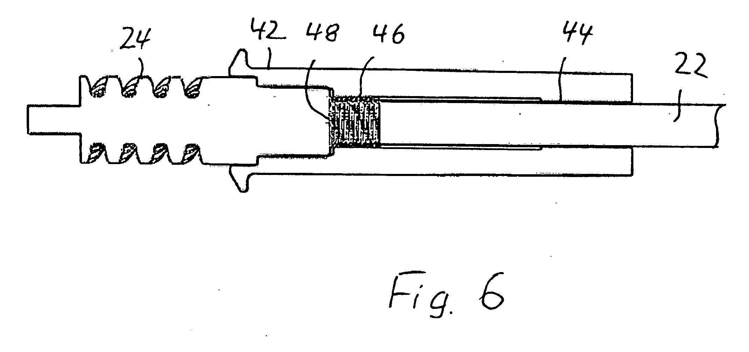

Fig. 6 zeigt die Verbindungswelle 22 in der zweiten Position. Die axiale Länge der Verbindungwelle 22 ist so gewählt, daß das in Fig. 6 nicht erkennbare rechte Ende der Verbindungswelle 22 in der zweiten Position aus der zugeordneten, in dem axialen Ansatz 42' (vgl. Fig. 4) gebildeten Ausnehmung freigekommen ist. In der zweiten Position kann das dem axialen Ansatz 42' zugewandte Ende der Verbindungswelle 22 unter gewisser elastischer Verformung der Verbindungswelle 22 radial über den axialen Ansatz 42' hinwegbewegt werden, so daß die Verbindungswelle 22 mit ihrem anderen Ende aus der Ausnehmung 44 in dem axialen Ansatz 42 herausbewegt und so gelöst werden kann. Auf diese Weise ist die Demontage der Verbindungswelle 22 besonders einfach gestaltet. Die Montage der Verbindungswelle kann in entsprechend umgekehrter Weise erfolgen.

## Patentansprüche

1. Elektromotorisch verstellbare Stützeinrichtung (2) zur Abstützung einer Polsterung eines Sitz- und/oder Liegemöbels, insbesondere einer Matratze eines Bettes,
mit einem Grundkörper (4), der ein erstes Stützteil (6) aufweist, das relativ zu einem zweiten Stützteil (10) verstellbar, insbesondere verschwenkbar ist,
mit einer elektromotorischen Verstelleinrichtung (12), die mit dem ersten Stützteil (6) in Wirkungsverbindung steht zum Verstellen desselben,
wobei die verstelleinrichtung (12) eine erste (16) und eine zweite Verstelleinheit (18) aufweist, die an gegenüberliegenden Längsseiten des Grundkörpers (14) angeordnet sind,
wobei ein drehbar gelagertes Bauteil der ersten Verstelleinheit (16) über eine Verbindungswelle (22) im wesentlichen drehfest mit einem gleichartigen Bauteil der zweiten Verstelleinheit (18) verbunden ist und
wobei die axialen Enden der Verbindungswelle (22) in Ausnehmungen (44) an den drehbar gelagerten Bauteilen eingreifen,
**dadurch gekennzeichnet,**
**daß** die Verbindungswelle (22) axial zwischen einer ersten Position, in der die drehbar gelagerten Bauteile durch die Verbindungswelle (22) drehfest miteinander verbunden sind, und einer zweiten Position, in der ein Ende der Verbindungswelle (22) aus der zugeordneten Ausnehmung (44) freigekommen ist, beweglich ist und
**daß** die Verbindungswelle (22) durch Federmittel in die erste Position vorgespannt ist.

2. Stützeinrichtung nach Anspruch 1, **dadurch gekennzeichnet, daß** die Ausnehmungen (44) in den drehbar gelagerten Bauteilen Sacklöcher sind.

3. Stützeinrichtung nach Anspruch 2, **dadurch gekennzeichnet, daß** die lichte axiale Weite zwischen den Gründen (48) der Sacklöcher größer ist als die axiale Länge der Verbindungswelle (22).

4. Stützeinrichtung nach Anspruch 2 oder 3, **dadurch gekennzeichnet, daß** die Federmittel wenigstens eine Feder aufweisen, die zwischen dem Grund (48) des Sackloches und dem zugeordneten axialen Ende der Verbindungswelle (22) angeordnet ist.

5. Stützeinrichtung nach Anspruch 4, **dadurch gekennzeichnet, daß** die Feder eine Schraubenfeder (46) ist.

## Claims

1. Support device (2), which is adjustable by an electric motor, for supporting a cushion of a piece of furniture for sitting and/or lying on, in particular a mattress of a bed,
with a base body (4) having a first support part (6) that is adjustable, in particular pivotable, relative to a second support part (10),
with an electric motor adjusting device (12) which is in operative connection with the first support part (6) for the adjustment thereof,
wherein the adjusting device (12) comprises a first (16) and a second adjusting unit (18), which are arranged on opposite longitudinal sides of the base body (14),
wherein a rotationally supported component of the first adjusting unit (16) is connected in an essentially rotationally fixed manner to a similar component of the second adjusting unit (18) via a connecting shaft (22),
wherein the axial ends of the connecting shaft (22) engage in recesses (44) on the rotatably supported components,
**characterised in that**
the connecting shaft (22) can be moved axially between a first position in which the rotatably supported components are connected to one another in a rotationally fixed manner by the connecting shaft (22), and a second position, in which one end of the connecting shaft (22) is released from the associated recess (44) and
**in that** the connecting shaft (22) is pretensioned into the first position by a spring device.

2. Support device according to claim 1, **characterised in that** the recesses (44) in the rotatably supported components are blind holes.

3. Support device according to claim 2, **characterised in that** the axial clearance between the bottoms (48) of the blind holes is greater than the axial length of the connecting shaft (22).

4. Support device according to claim 2 or 3, **characterised in that** the spring device includes at least one spring which is arranged between the base (48) of the blind hole and the associated axial end of the connecting shaft (22).

5. Support device according to claim 4, **characterised in that** the spring is a helical spring (46).

## Revendications

1. Dispositif de soutien (2) réglable au moyen d'un moteur électrique destiné à soutenir un capitonnage d'un meuble destiné à s'asseoir et/ou à se coucher, en particulier d'un matelas d'un lit,
comprenant un élément de base (4) qui présente une première partie de soutien (6) qui est réglable, en particulier inclinable, par rapport à une deuxième partie de soutien (10),
comprenant un dispositif de réglage électromoteur (12) qui est dans une relation fonctionnelle avec la première partie de soutien (6) en vue du réglage de celle-ci,
dans lequel le dispositif de réglage (12) comprend une première (16) et une deuxième unité de réglage (18) qui sont agencées sur des côtés longitudinaux en opposition de l'élément de base (14),
dans lequel un composant de la première unité de réglage (16) monté de façon rotative est relié à un composant similaire de la deuxième unité de réglage (18) d'une façon empêchant sensiblement la rotation par le biais d'un arbre de liaison (22), et
dans lequel les extrémités axiales de l'arbre de liaison (22) s'engagent dans des évidements (44) dans les composants montés de façon rotative,
**caractérisé en ce que** l'arbre de rotation (22) peut être déplacé axialement entre une première position, dans laquelle les composants montés de façon rotative sont reliés l'un à l'autre d'une façon empêchant la rotation par le biais de l'arbre de liaison (22), et une deuxième position, dans laquelle une extrémité de l'arbre de liaison (22) est libérée de l'évidement (44) y afférent, et
**en ce que** l'arbre de liaison (22) est précontraint dans la première position par le biais de moyens de ressort.

2. Dispositif de soutien selon la revendication 1, **caractérisé en ce que** les évidements (44) dans les composants montés de façon rotative sont des trous borgnes.

3. Dispositif de soutien selon la revendication 2, **caractérisé en ce que** la largeur axiale dégagée entre les fonds (48) des trous borgnes est plus grande que la longueur axiale de l'arbre de liaison (22).

4. Dispositif de soutien selon la revendication 2 ou 3, **caractérisé en ce que** les moyens de ressort comprennent au moins un ressort qui est agencé entre le fond (48) du trou borgne et l'extrémité axiale y afférente de l'arbre de liaison (22).

5. Dispositif de soutien selon la revendication 4, **caractérisé en ce que** le ressort est un ressort à boudin (46).
